# EUROPÄISCHE PATENTANMELDUNG

(11) **EP 0 865 091 A2**
(43) Veröffentlichungstag der Anmeldung: **16.09.1998**
(21) Anmeldenummer: 98102041.5
(22) Anmeldetag: 06.02.1998
(51) Int. Cl.: H01M 10/40, H01M 4/02

(54) **Laminierte Lithium-Ionen-Zelle und Verfahren zu ihrer Herstellung**

(30) Priorität: 10.03.1997 DE 19709783
(71) Anmelder: VARTA Batterie Aktiengesellschaft, 30419 Hannover (DE)
(72) Erfinder: Bäuerlein, Peter, Dr., 65520 Bad Camberg (DE); Oberhauser, Johanna, 65779 Kelkheim (DE); Praas, Hans-Walter, Dr., 73479 Ellwangen (DE); Schomann, Hermann, 63225 Langen (DE)
(74) Vertreter: Kaiser, Dieter Ralf, Dipl.-Ing.

(57) **Zusammenfassung**

Die Erfindung betrifft eine laminierte Lithium-Ionen-Zelle, die aus flexiblen Schichten besteht, wobei die negative Elektrode Lithiummetall, Lithiumlegierung oder ein metallisches Vlies oder Schaum ist, welches ein lithiuminterkalierendes Material wie Kohlenstoff, Graphit, Wolframdioxyd, Molybdendioxyd, Titandioxid, Titandisulfid oder Vanadinpentoxyd als aktive Komponente enthält, der Separator ein poröses Polymer ist, in dem ein nichtwäßriger Elektrolyt festgelegt ist und die positive Elektrode als aktives Material lithiierten Braunstein, Manganspinelle, Lithium-Metalloxyde, -Mischoxyde oder -Sulfide enthält.

## Beschreibung

Die Erfindung betrifft eine laminierte Lithium-Ionen-Zelle und ein Verfahren zu ihrer Herstellung. Insbesondere betrifft die Erfindung wiederaufladbare Lithium-Ionen-Zellen, die einen Separator aus einem porösen Polymermaterial besitzen. Diese polymere Matrix besitzt eine ionische Leitfähigkeit, weil sie eine Lösung eines dissoziierbaren Lithiumsalzes in einem organischen Lösungsmittel enthält. Lithium-Ionen können sich daher von einer Elektrode zur anderen durch den Separator bewegen.

Laminierte Lithium-Ionen-Zellen sind aus dem Dokument US-A 5470357 bekannt. Die positive und negative Elektrode sowie der Separator besitzen jeweils eine flexible, polymere Matrix. Sie werden mit polymerbeschichteten Stromableiterfolien durch Hitze und Druck zu einer flexiblen Laminat-Struktur verbunden. Die für die Elektroden, den Separator und die Vorbeschichtung der Stromableiterfolien jeweils eingesetzten Polymere müssen dabei untereinander verträglich sein. Vorzugsweise wird in allen Fällen ein Copolymer aus Vinylidendifluorid und Hexafluoropropylen (PVdF-HFP-Copolymer) eingesetzt. Die bekannten Lithium-Ionen-Zellen sind somit auf eine polymere Matrix für die Herstellung der Elektroden- und Separatorschichten angewiesen.

Die Erfindung hat sich die Aufgabe gestellt, laminierte Lithium-Ionen-Zellen und Verfahren zu deren Herstellung anzugeben, die Lithiummetall, Lithiumlegierungen oder metallische Elektrodenträgermaterialien für laminierte Zellen verfügbar machen.

Die erfindungsgemäßen Zellen und das Verfahren zu ihrer Herstellung sind in den Ansprüchen 1-10 dargelegt.

Die laminierten Lithium-Ionen-Zellen bestehen danach aus flexiblen Schichten, wobei die negative Elektrode Lithiummetall, Lithiumlegierung oder ein metallisches Vlies oder Schaum ist, welches ein lithiuminterkalierendes Material wie Kohlenstoff, Graphit, Wolframdioxyd, Titandioxid, Titandisulfid, Molybdendioxyd oder Vanadinpentoxyd als aktive Komponente enthält, der Separator aus einem porösen Polymeren besteht, in dem ein nichtwäßriger Elektrolyt festgelegt ist und die positive Elektrode als aktives Material lithiierten Braunstein, Manganspinell, Lithium-Metalloxyde, - Mischoxyde oder - Sulfide enthält.

Bei der Verwendung von Lithium-Metall oder Lithiumlegierung wird als Stromableiter ein elektrochemisch stabiles, metallisches Gitter oder Netz mit einlaminiert. Es kann auch ein Teil des die negative Elektrode abdeckenden Polymermaterials vor dem Einbau in ein Zellengehäuse entfernt werden. Die Zellen kommen ohne einen äußeren Anpreßdruck aus. Die negative Elektrode kann auch aus einem Vlies oder Schaumkörper bestehen, welcher aus Nickel hergestellt ist und in den Lithiuminterkalationsverbindungen wie Kohlenstoffmaterialien, Graphite oder Metalloxyde wie MoO₂, WoO₂, TiO₂, V₂O₅ oder Metallsulfide wie Ti S₂ mit elektrisch leitfähigen Zusätzen wie Leitrußen und Bindemitteln wie Polfletrafluorethylen- (PTFE), Polyethylenoxid- (PEO) oder Polyvinylidendifluorid- (PVdF) Dispersionen einpastiert sind. Das so erhaltene negative Elektrodenband wird anschließend getrocknet und durch Walzen verdichtet. Die negativen Elektroden werden vorzugsweise mit einer Polyethylenoxyd- (PEO) Dispersion vorbeschichtet. Ein Zusatz von Graphit zur PEO-Dispersion ermöglicht eine Vorlithiierung des Graphits. Als Stromableiter wird vorzugsweise ein Kupfer-Streckmetall oder -Netz eingesetzt.

In der positiven Elektrode kann ein Nickel- oder Aluminium-Vlies, -Streckmetall oder -Netz als Träger eingesetzt werden, in das Braunstein oder lithiierte Braunsteine, Spinelle oder Lithiummetalloxyde wie LiNiO₂, LiCoO₂ mit Leitrußen und oben genannten Bindemitteln einpastiert werden.

Das aus der positiven und negativen Elektrode mit dem Separator zusammen laminierte Elektrodenstack der erfindungsgemäßen Lithium-Ionen-Zelle kann nach dem Laminieren in Trockenräumen oder sogar bei normaler Luftfeuchtigkeit, d.h. im Bereich von 1 bis 50 % Feuchtigkeit gehandhabt werden. Das Elektrodenstack kann ohne Kapazitätsverlust gelagert werden. Die Aktivierung erfolgt erst durch das Einbringen des nichtwäßrigen Elektrolyten. Dies erfolgt dadurch, daß entweder der Weichmacher extrahiert und das Elektrodenstack anschließend mit der Lösung des Leitsalzes in einem organischen Lösungsmittel getränkt wird oder durch den direkten Austausch des Weichmachers gegen den Elektrolyten, d.h., daß das laminierte Elektrodenstack für über einen Zeitraum von 5 bis 30 Minuten in der Elektrolytlösung gelagert wird. Dazu ist eine Schutzgasatmosphäre mit H₂O Gehalt im ppm-Bereich erforderlich. Die erfindungsgemäßen laminierten Lithium-Ionen-Zellen sind insbesondere für die Herstellung sehr flacher und flexibler Zellen geeignet, deren Dicke zwischen 200 µm und 1 mm liegen.

Die Erfindung wird nachfolgend anhand von Beispielen und zwei Abbbildungen näher erläutert. Es zeigen:
- Abbildung 1: die Entladekurve einer Zelle, die gemäß Beispiel 2 hergestellt und bei Raumtemperatur mit einem konstanten Entladestrom von 3 mA bis zu einer Abschaltspannung von 1,8 V entladen sowie mit einem konstanten Entladestrom von 1 mA nachentladen wurde,
- Abbildung 2: die Entladekurve einer Zelle, die gemäß Beispiel 2 hergestellt und vor der Entladung unter den o.g. Bedingungen 36 Tage bei 60°C gelagert wurde.

### Beispiel 1

Zur Herstellung des Kathodenmaterials werden
- 22 g: LiMnO₂
- 5,9 g: PVdF
- 2,6 g: Leitruß
- 9 g: Dibutylphthalat in
- 75 ml: Aceton
dispergiert und mit Hilfe der Rakeltechnik bei einer Spaltbreite von 850 µm zu einem Film ausgezogen. Der Film wird innerhalb von ca. 10 Minuten getrocknet. Die Kathodenfolie wird anschließend durch Laminieren auf ein Aluminiumstreckmetall bei 175 °C mit einem Stromableiter versehen und in rechteckige Stücke mit einer Fläche von 24,75 cm² geteilt.

Das Anodenmaterial wird dadurch erhalten, daß eine ca. 250 µm starke Lithiumfolie auf ein Kupferstreckmetall aufgewalzt wird und die kein oder nur teilweise Lithium-enthaltenen Ränder entfernt werden.

Das im wesentlichen aus den vorgenannten Materialien und einem PVdF-Separator bestehende Zellenstack wird in der Weise erhalten, daß Stücke der vorgenannten Materialien übereinandergestapelt werden, wobei auf die dem Stromableiter abgewandten Seite des Kathodenmaterials ein ca. 110 µm starker PVdF-Separator, das Anodenmaterial und ein zweiter ca. 55 µm starker PVdF-Separator gelegt werden. Die PVdF-Separatoren besitzen dabei einen das Anodenmaterial allseitig überragenden Rand von ca. 5 mm. Dieses Zellenstack wird auf einem Walzenstuhl, dessen Auflagefläche beheizt ist, bei ca. 140 °C von beiden Seiten laminiert. Das erhaltene Zellenstack hat eine Gesamtdicke von 720 µm. Das laminierte Zellenstack wird zur Entfernung des Weichmachers drei mal mit absolutem Diethylether unter Rühren extrahiert und anschließend getrocknet. Das so behandelte Zellenstack wird mit einer Elektrolytlösung bestehend aus einer einmolaren LiPF₆-Lösung in einem 1 : 1 -Gemisch aus Ethylencarbonat (EC) und Diethylcarbonat (DEC) ca. 30 min getränkt, überschüssiger Elektrolyt entfernt und in einem metallisierten, mehrschichtigen Folienmaterial eingeschweißt. Dabei handelt es sich um eine metallisierte Polyethylen- / Polypropylenfolie.

Die Zellen haben eine spezifische Kapazität von 120 mAh bei einer konstanten Entladestromdichte von 0.12 mA/cm².

### Beispiel 2

Ein Kathodenmaterial wie in Beispiel 1, jedoch mit Tributylphosphat (TBP) als Weichmacher, wird bei einer Spaltbreite von 900 µm auf dem Rakeltisch zu einer Folie ausgezogen. Nach der Trocknung der Folie wird dieser auf ein Aluminiumstreckmetall bei 158 °C auflaminiert, wobei die Kathodenfolie und das Streckmetall zwischen zwei Teflonfolien gelegt werden.

Als Anodenmaterial wird die gemäß Beispiel 1 erhältliche Lithium-Metallfolie auf einem Kupferstreckmetall eingesetzt.

Als Separator wird ein bei einer Spaltbreite von 500 µm gegossener PVdF-Film verwendet, der 20 Gew.% SiO₂, 30 Gew.% PVdF und 50 Gew.% Tributylphosphat enthält.

Das Zellenstack wird aus den vorgenannten Komponenten analog Beispiel 1 zusammenlaminiert und 15 Minuten unter Rühren in dem aus einer einmolaren LiClO₄ - Lösung in Propylencarbonat (PC)-bestehenden Elektrolyt gelagert. Die elektrolythaltigen Zellenstacks werden in metallisierten Mehrschichtfolien gemäß Beispiel 1 eingeschweißt.

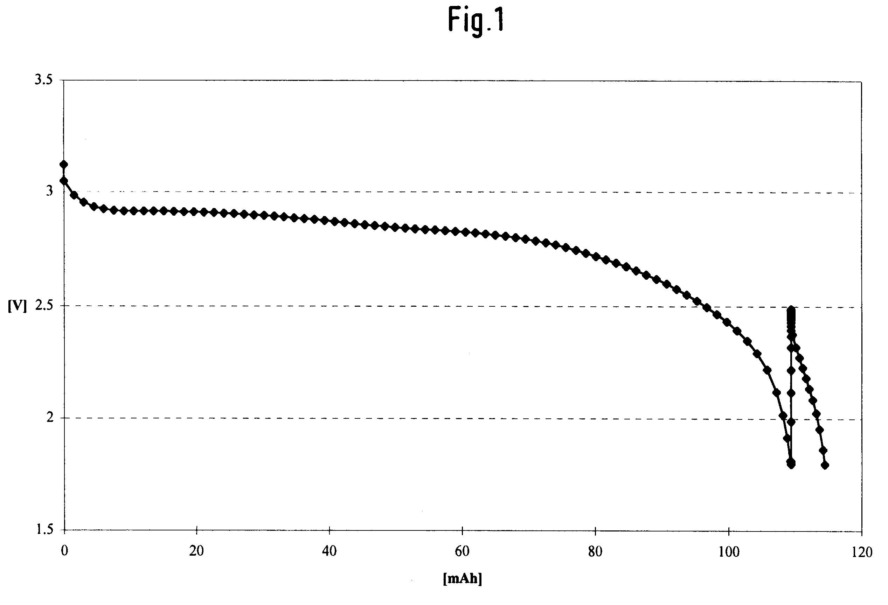

Abbildung 1 zeigt den Verlauf der Zellenspannung in Volt gegenüber der entnommenen Kapazität in mAh unter konstanten Entladestrombedingungen bei Raumtemperatur, wobei mit 3 mA bis zu einer Abschaltspannung von 1,8 V entladen wird und eine Nachentladung mit 1 mA erfolgte.

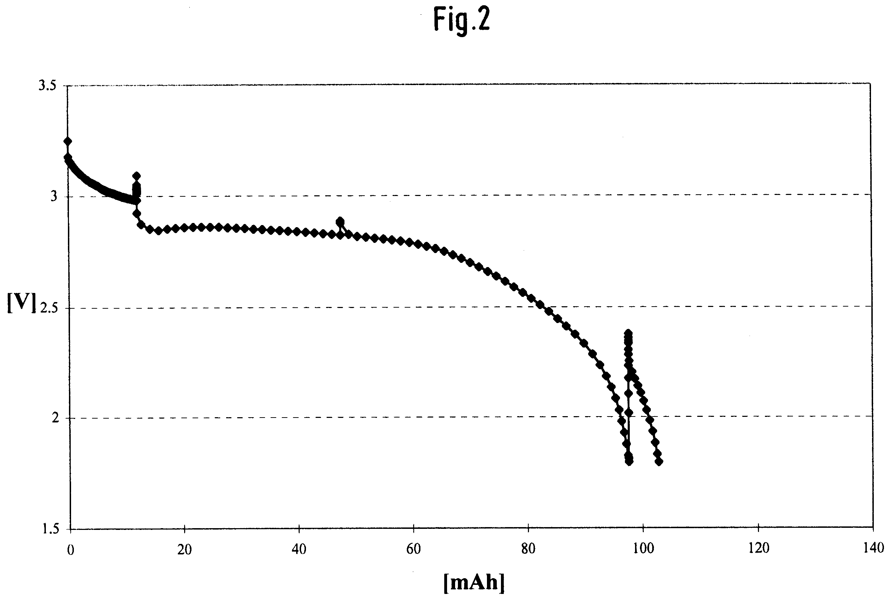

Abbildung 2 zeigt die Entladekurve einer analogen Zelle, die jedoch vor der Entladung 36 Tage bei 60 °C gelagert wurde.

### Beispiel 3

Ein Kathodenmaterial wurde analog Beispiel 1 hergestellt, jedoch Lithiumspinell als aktive Komponente verwendet.

Die analog Beispiel 1 hergestellte Anode wird mit einer Suspension von Ethylencarbonat, Polyethylenoxid in Tetrahydrofuran beschichtet.

Als Separator werden 30 Gew.% eines Polyvinylidendifluorid-Hexafluoropropylen-Copolymers eingesetzt, welches 20 Gew.% SiO₂ und 50 Gew.% Dibutylphthalat enthält.

Das aus Kathodenmaterial, Separator und Anodenmaterial bestehende Zellenstack wird bei 70 bis 100 °C zusammenlaminiert und mit einem aus LiPF₆ in einem aus einem 2 : 1 Gemisch von EC und DMC bestehenden Elektrolyt getränkt. Die gemäß Beispiel 1 durch Einschweißen des Zellenstacks in eine metallisierte Mehrschichtfolie erhaltenen Zellen haben eine spezifische Kapazität von 43,5 mAh bei 9stündiger Entladung.

### Beispiel 4

Analog Beispiel 1 werden Zellen hergestellt mit dem Unterschied, daß zusätzlich ein Polypropylen-Separator gemäß Beispiel 1 mit einlaminiert und ein lithiierter Braunstein verwendet wird.

Die komplettierten Zellen haben eine spezifische Zellenkapazität von 25,5 mAh bei einer Entladung mit einem konstanten Strom von 3 mA.

## Patentansprüche

1. Laminierte Lithium-Ionen-Zelle, die aus flexiblen Schichten besteht, wobei die negative Elektrode Lithiummetall, Lithiumlegierung oder ein metallisches Vlies oder Schaum ist, welches ein lithiuminterkalierendes Material wie Kohlenstoff, Graphit, Wolframdioxyd, Titandioxid, Titandisulfid, Molybdendioxyd oder Vanadinpentoxyd als aktive Komponente enthält, der Separator aus einem porösen Polymeren besteht, in dem ein nichtwäßriger Elektrolyt festgelegt ist und die positive Elektrode als aktives Material lithiierten Braunstein, Manganspinell, Lithium-Metalloxyde, - Mischoxyde oder - Sulfide enthält.

2. Laminierte Lithium-Ionen-Zelle nach Anspruch 1, bei der die aus Lithiummetall oder Lithiumlegierung bestehende negative Elektrode auf der dem Separator abgewandten Seite mit einer Polymerfolie abgedeckt ist.

3. Laminierte Lithium-Ionen-Zelle nach Anspruch 2, bei der die negative Elektrode mit einer Polyethylenoxyd-Dispersion vorbeschichtet ist.

4. Laminierte Lithium-Ionen-Zelle nach Anspruch 2 und/oder 3, bei der die Polyethylenoxyd-Dispersion Graphit enthält.

5. Laminierte Lithium-Ionen-Zelle nach einem oder mehreren der Ansprüche 2 - 4, bei der ein metallisches Gitter oder Netz als Stromableiter in mindestens eine der Elektroden mit einlaminiert ist.

6. Laminierte Lithium-Ionen-Zelle nach einem oder mehreren der Ansprüche 1 - 5, deren Separatormaterial aus Polypropylen, Polyethylen, Polyethylenoxyd, Polyvinylidendifluorid, Polytetrafluorethylen, Polyamid oder deren Co- bzw. Terpolymeren besteht.

7. Laminierte Lithium-Ionen-Zelle nach einem oder mehreren der Ansprüche 1 - 6, bei der die schichtförmigen Elektroden und der Separator eine Fläche bis zu 50 cm² und eine Dicke bis 1 mm besitzen.

8. Verfahren zur Herstellung einer laminierten Lithium-Ionen-Zelle gemäß einem oder mehreren der Ansprüche 1 - 7, bei dem dem Separatormaterial der positiven Elektrode und gegebenenfalls dem, die negative Elektrode abdeckenden Polymermaterial, vor dem Laminieren ein Weichmacher zugesetzt wird.

9. Verfahren nach Anspruch 8, bei dem der Weichmacher vor der Inbetriebnahme der Zellen gegen einen nichtwäßrigen Elektrolyten ausgetauscht wird.

10. Verfahren nach Anspruch 8 und 9, bei dem ein Teil des die negative Elektrode abdeckenden Polymermaterials entfernt wird.
